# EUROPEAN PATENT SPECIFICATION

(11) **EP 0 638 749 B1**
(45) Date of publication and mention of the grant of the patent: **17.06.1998**
(21) Application number: 94305635.8
(22) Date of filing: 29.07.1994
(51) Int. Cl.: F16L 11/04, F16L 9/12

(54) **Improvements in or relating to pipes**
Verbesserungen an Rohren
Améliorations relatives aux tuyaux

(30) Priority: 09.08.1993 GB 9316521; 01.03.1994 GB 9403876
(43) Date of publication of application: 15.02.1995
(73) Proprietor: VICTAULIC PLC, Hitchin Hertfordshire SG4 0UD (GB)
(72) Inventor: Hill, David John, Huntingdon, Cambs PE18 9UA (GB)
(74) Representative: Hutchins, Michael Richard

(56) References cited:
- WO-A-93/21466
- DE-C- 4 214 383
- DE-U- 9 203 865
- FR-A- 2 334 042
- GB-A- 2 058 280
- US-A- 4 800 109

## Description

The present invention relates to a polyolefin pipe having a wall structure incorporating a barrier layer for preventing or substantially impeding the permeation therethrough of gaseous and/or hydrocarbon materials.

In recent years, there has been an increasing trend to form pipes intended to carry mains services such as water or gas, or to carry petroleum or oil or natural gas products, from polyolefins, and more particularly polyethylene. In many respects, polyethylene (PE) is an ideal pipe-line material and many techniques have been developed to make the best use of its handling and physical characteristics, such as its flexibility and toughness. However, one problem with polyethylene is that whereas it has very low permeability to water vapour and aqueous media in general, it is very permeable to hydrocarbons and other organic solvents, including petroleum products and to many gases. From economic, environmental and health and safety points of view, polyethylene is therefore unsuitable for many applications. Examples of situations where it is highly desirable if not essential that the wall of the pipe should have low permeability to hydrocarbons and oil and petroleum based products are pipe systems for transmission of petroleum based fluids, for example pipes for petrol stations connecting underground tanks to dispensing pumps, or pipes for the transmission of natural oil and gas products, for example in the off-shore oil industry. Other situations in which low permeability of the pipe to hydrocarbons would be very important are in relation to pipes for potable water intended to be laid in contaminated ground (e.g. contaminated with oil, coal tar, petroleum etc). In this situation, the need is to prevent ingress of hydrocarbon into the water supply, rather than egress out through the walls of the pipes.

Polymers are known which have a very low permeability to hydrocarbons and to gases and examples of such polymers include ethylene vinylalcohol polymer (EVOH), polyamides of all kinds (PA), polyethylene terephthalate (PET) and polyvinylidene fluoride (PVdF) and polyvinylidene chloride (PVdC). However, such materials have very different physical properties to polyethylene and/or are considerably more expensive, and consequently it is not practicable to construct pipelines from such materials, although multi-layer pipes having inner and outer polyamide layers between which is sandwiched a thinner layer formed from *inter alia* homo-polyolefins or co-polyolefins, grafted homo-polyolefins, ethylene-vinylalcohol-copolymers, polyamide-copolymer elastomers or mixtures with polyolefin elastomers, have been disclosed as being useful for conveying fluids or gases in pipeline systems; see DE-U-92 03 865 (EMS-Inventa AG).

In some fields (e.g. the food packaging industry), it has become relatively commonplace to incorporate such relatively impermeable polymers into multi-layer products, by coextrusion and other processes. Typically packaging film for food products may consist of various thin layers of different polymers, each having its own attributes. Commonly, these polymers will include low density polyethylene or linear low density polyethylene for the main body of the film (the thickest layer) along with a thin barrier layer of, for example, EVOH sandwiched between two layers of polyethylene. However, it is necessary for the various layers to be bonded together using an adhesive polymer or tie layer, which may serve no other purpose than as a bonding material. Thus, for example if it were desired to incorporate a thin layer of EVOH into a polyethylene film product in order to confer low oxygen permeability, then such a layer of EVOH would be sandwiched between two layers of PE and two tie layers, making five layers in all i.e. PE/tie/EVOH/tie/PE. In this way a film is produced having physical properties similar to polyethylene, but with low oxygen permeability. Also, as the EVOH and tie layers are relatively thin, the material cost is not significantly increased. Additional layers may also be provided to incorporate, for example, recycled material or other materials having additional properties or particular barrier properties with respect to individual chemicals. This can lead to multi layer structures having seven or more layers.

Whereas such technology could be adapted for use in the manufacture of pipes, the need for a five layer structure considerably complicates the extrusion process and leads to substantial capital cost.

It has now been found by the applicant that it is possible to omit the adhesive layers or tie layers without weakening the wall structure and without increasing any tendency to delamination of the layers, by incorporating into the polyethylene layer and/or the barrier layer a relatively small concentration of an adhesive polymer. Surprisingly it has been found that even when the polyolefin layer or the barrier layer contain only small concentrations of adhesive polymer, nevertheless a good level of adhesion can be developed during the coextrusion process. More surprisingly, the adhesive polymer can be incorporated in the barrier layer alone without reducing the bonding strength between the two layers. This bonding strength was enhanced when a barrier layer was used having some olefinic characteristics. Even more surprising was the finding that by incorporating the adhesive polymer into the barrier layer, there was no increase in permeability of the barrier layer and in fact in certain instances the permeability may even have been reduced, despite the expectation that the adhesive polymer not being of particularly low permeability itself would behave merely as a diluent.

Accordingly, in a first aspect, the invention provides a pipe having a pipe wall comprising a polyolefin layer, and bonded thereto with no intervening adhesive layer a barrier layer, the barrier layer being thinner than the polyolefin layer and being formed of a barrier material, which barrier material has enhanced resistance to the permeation therethrough of gaseous and/or hydrocarbon materials relative to the polyolefin; either the polyolefin layer or barrier layer, or both, having adhesive polymer units derived from unsaturated epoxy or acyl compounds incorporated therein, in at least the region of an interface between the layers; the adhesive polymer units being present in a concentration effective to bond the polyolefin layer to the barrier layer.

In one embodiment, the barrier layer has incorporated therein the said adhesive polymer units.

A pipe according to the present invention may have a wall consisting of two layers, i.e. a polyolefin layer and a barrier layer. The barrier layer may define the external surface of the pipe, or it may define the internal surface of the pipe. In another embodiment, the wall of the pipe may comprise a barrier layer sandwiched between two polyolefin layers.

The adhesive polymer units may form part of an adhesive polymer which is admixed with the polyolefin and/or barrier material prior to pipe formation. The adhesive polymer preferably is derived in part from olefin monomers.

The adhesive polymer units are derived from unsaturated epoxy or acyl compounds. Examples of unsaturated acyl compounds are those selected from unsaturated monocarboxylic acids, unsaturated dicarboxylic acids, and derivatives thereof such as acid halides, amides, imides, anhydrides and esters thereof. Preferably the adhesive polymer units are derived from unsaturated dicarboxylic acids and anhydrides thereof. Alternatively, the adhesive polymer units may be derived from an unsaturated epoxy compound, such compound having an epoxy and one or more unsaturated bonds capable of polymerisation. The unsaturated epoxy compound may, for example be a compound selected from R.CO.O.CH₂CHOCH₂, R.X.CH₂.CHOCH₂ and R.R'.COCH₂ where R is a hydrocarbon group having an ethylenic unsaturated bond capable of polymerisation, R' is hydrogen or C₁₋₆ alkyl (preferably methyl) and X is a group - CH₂O - or -(C₆H₄)-O-.

Particular examples of unsaturated acyl and epoxy compounds are acrylic acid, methacrylic acid, α-ethylacrylic acid, maleic acid, fumaric acid, itaconic acid, citraconic acid, tetrahydrophthalic acid, methyltetrahydrophthalic acid, endo-cis-bicyclo[2.2.1] hepto-5-en-2,3-dicarboxylic acid, and methyl-endo-cis-bicyclo [2.2.1] hepto-5-en-2,3 dicarboxylic acid, maleanil chloride, maleimide, maleic anhydride, citraconic anhydride, maleic acid monomethyl ester and maleic acid dimethyl ester, glycidyl acrylate, glycidyl methacrylate, mono- and diglycidyl esters of itaconic acid, mono-, di- and triglycidyl esters of butene tricarboxylic acids, mono-and diglycidyl esters of citraconic acid, mono- and diglycidyl esters of endo-cis-bicyclo[2.2.1]-hepto-5-en-2,3-dicarboxylic acid, mono- and diglycidyl esters of endo-cis-bicyclo [2.2.1]-hepto-5-en-2-methyl-2,3-dicarboxylic acid, mono-and diglycidyl esters allylsuccinic acid, glycidyl esters of P-styrene carboxylic acids, allyl glycidyl ether, 2-methyallyl glycidyl ether, styrene-p-glycidyl ether,3,4-epoxy-1-butene, 3,4-epoxy-3-methyl-1-butene, 3,4-epoxy-1-pentene, 3,4-epoxy-3-methyl-1-pentene, 5,6-epoxy-1-hexene and vinylcyclohexene monoxide.

The adhesive polymer used in the pipes of the present invention may be formed in one of a number of ways. Thus they can be formed from :-
a) Random co-polymerisation of olefin monomers and unsaturated acyl compounds;
b) Block co-polymerisation of olefin monomers and unsaturated acyl compounds;
c) Graft polymerisation of unsaturated acyl compounds to polyolefins;
d) Random co-polymerisation of olefin monomers and unsaturated epoxy compounds;
e) Block co-polymerisation of olefin monomers and unsaturated epoxy compounds; and
f) Graft co-polymerisation of unsaturated acyl compounds to polyolefins.

A most preferred adhesive polymer is a graft copolymer derived from maleic anhydride and polyethylene.

The concentration of adhesive polymer units in the region of the interface between the barrier layer and the polyolefin layer will be sufficient to enable the two layers to be bonded together during pipe manufacture to form a bond of sufficient strength such that delamination thereafter does not occur during the use of the pipe. Thus, for example, the layer or layers containing the adhesive polymer units can be of a composition (in at least the interface region) wherein molecular chains containing or defining the adhesive polymer units constitute at least 0.1% by weight and preferably 1 to 15% by weight, for example approximately 5-10% by weight.

The barrier layer is preferably formed of a substance which has low permeability to hydrocarbons and/or gases such as oxygen and examples of such barrier materials are ethylene vinyl alcohol (EVOH), polyamides such as polyamide 6, modified polyamides, polyethylene terephthalate, polyvinylidene fluoride and polyvinylidene chloride.

The barrier material may be a modified material having olefinic characteristics, for example by virtue of being mixed with, and preferably chemically linked to, an olefinic component. The olefinic component can be, for example, an elastomer such as ethylene propylene rubber.

In particular, excellent adhesion may be provided when the barrier material is a modified polyamide having olefinic characteristics, for example an elastomer modified polyamide containing an elastomer such as ethylene propylene rubber. The elastomer is preferably chemically linked to the polyamide. This may be achieved by grafting the ethylene propylene rubber with the anhydride of an unsaturated carboxylic acid, such as maleic anhydride, and then reacting the resulting graft polymer with the polyamide so as to effect chemical linkage therebetween. An advantage of a polyamide material thus modified is that it has enhanced flexibility giving improved compatibility with the polyolefin (eg polyethylene) pipe material.

In a further aspect, the present invention provides a process for preparing a pipe, which method comprises coextruding coaxial layers of the polyolefin and barrier material in the configuration as claimed in one of claims 1 - 17, under conditions effective to fuse together the said polyolefin and barrier layers.

The invention will now be illustrated, but not limited, by reference to the particular embodiments shown in the accompanying drawing of which :-
Figure 1 is a sectional elevation of a prior art multi-layer form of construction;
Figure 2 is a sectional view through part of the wall of a bi-laminar pipe according to one embodiment of the invention; and
Figure 3 is a cross-sectional view through part of the wall of a tri-laminar pipe according to a second embodiment of the invention.

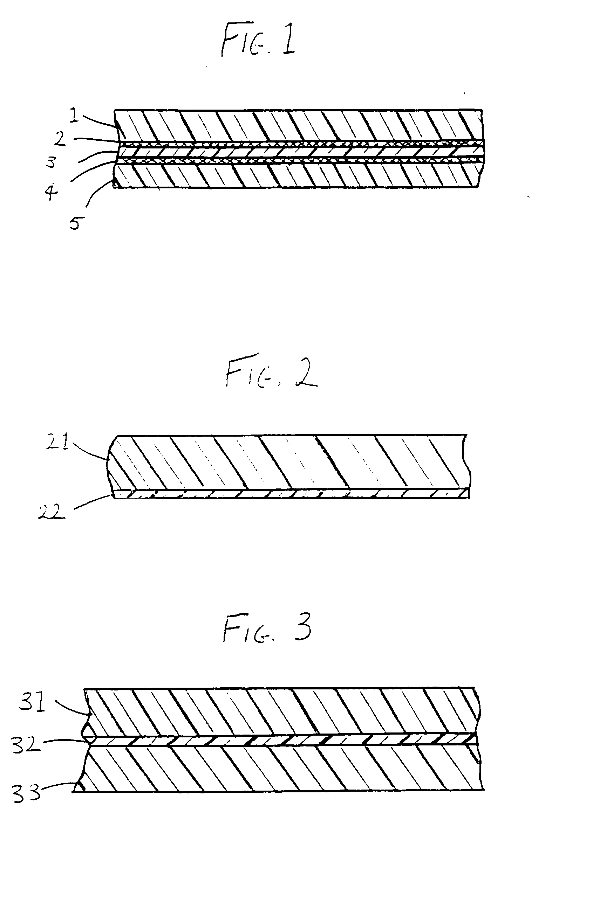

Turning now to the figures, it can be seen that figure 1 illustrates a known form of construction of a multi-layer plastics article incorporating a barrier layer. The wall of the article includes a barrier layer 3 formed of, for example EVOH, PA, PET or PVdF sandwiched between two polyethylene layers 1 and 5. The polyethylene and barrier layers are bonded together by adhesive layers 2 and 4 which can be, for example an adhesive polymer such as a copolymer derived from maleic anhydride and polyethylene, eg Admer L2100 (Trade Mark) or Novatec AP547H (Trade Mark). A five layer structure of this type may be acceptable and relatively straightforward to manufacture for many applications, but if used in the construction of pipes would be relatively costly and complicated to produce. Pipes having a wall structure which contain a barrier layer but which omit a separate adhesive or tie layer in accordance with the invention are illustrated in Figures 2 and 3. Thus, in Figure 2 there is shown a bi-layer pipe consisting of a high density polyethylene -(HDPE) layer 21 directly bonded to a barrier layer 22 which in this embodiment is formed from polyamide 6 such as DuPont Zytel FE7101. In this embodiment, either the polyethylene layer 21 or the barrier layer 22, but preferably the barrier layer, contain 5% by weight of an adhesive polymer which is a graft co-polymer of maleic anhydride and polyethylene, the grafting rate being 0.1 to 15 parts by weight of the graft monomer to the polyolefin. Such an adhesive polymer is sold under the name Admer (trade mark) manufactured and sold by Mitsui Petrochemical Industries Tokyo, Japan.

Purely by way of example, the HDPE layer can be up to 30mm thick whereas the polyamide 66 layer 22 can be up to 5mm thick.

A test sample having a 2mm HDPE layer and a 0.5mm modified PA6 barrier layer was formed by coextrusion. The modified PA6 layer was formed from an ethylene propylene rubber-modified polyamide sold by Dupont under the tradename "Zytel". The PA6 layer contained in addition to the modified polyamide, 10% by weight of the adhesive resin "Novatec". The high density polyethylene was extruded using a 62.5mm single screw extruder with a barrel temperature of 170-250°C and the barrier polymer was extruded using a 32mm single screw extruder with a barrel temperature of 230 - 260°C. Both extruders terminated at a coextrusion die (temp 230-260°C) having internal passageways which formed an annular pipe extrudate of approx 18mm diameter and having a thin layer of barrier polymer (0.1 - 0.5mm) at the approx centre of the wall thickness and between two layers of the high density polyethylene (total wall thickness 2 - 3mm). The pipe was then calibrated and cooled.

The resulting test pipe was inspected visually for delamination, and the cut end was probed with a scalpel blade in an attempt to separate the layers; no delamination was observed. Pipe samples were also immersed for 30 days in the solvents xylene and methanol, with no observed delamination. Only when a pipe sample was placed into a tensile testing machine and subject to tensile loading so that there was massive deformation and yielding of the two materials, was it possible to force delamination to occur. As pipes in service are never deliberately subjected to such deformation (which would be considered failure anyway), this is considered a very satisfactory result.

The permeability of the pipe to hydrocarbons was tested at ERA Technology Limited, Leatherhead, Surrey, United Kingdom, by an accelerated method. Pipe samples (in duplicate) containing 20% by volume of xylene were sealed and placed into an air circulating oven at 6°C for 30 days, the weight loss being monitored every day. The weight loss for the coextruded pipe described above was less than 9% after 7 days of that for a pipe of similar dimensions made from homogeneous high density polyethylene only. After 30 days the all HDPE pipe had lost virtually all of the xylene, whereas the coextruded pipe retained 70%.

Examples of polyamides particularly suitable for use in the pipes of the type illustrated in Figures 2 and 3 above are modified polyamides, for example the modified polyamide 6 sold under the name PA6 Zytel FE7101 by DuPont (UK) Ltd, Hemel Hempstead UK.

## Claims

1. A pipe having a pipe wall comprising a polyolefin layer, and bonded thereto with no intervening adhesive layer a barrier layer, the barrier layer being thinner than the polyolefin layer and being formed of a barrier material, which barrier material has enhanced resistance to the permeation therethrough of gaseous and/or hydrocarbon materials relative to the polyolefin; either the polyolefin layer or barrier layer, or both, having adhesive polymer units derived from unsaturated epoxy or acyl compounds incorporated therein, in at least the region of an interface between the layers; the adhesive polymer units being present in a concentration effective to bond the polyolefin layer to the barrier layer.

2. A pipe according to Claim 1 wherein the barrier layer has incorporated therein the said adhesive polymer units.

3. A pipe according to Claim 1 or Claim 2 having a wall consisting of two layers, i.e. a polyolefin layer and a barrier layer.

4. A pipe according to Claim 1 or Claim 2 wherein the wall of the pipe comprises a barrier layer sandwiched between two polyolefin layers.

5. A pipe according to any one of the preceding Claims wherein the adhesive polymer units form part of an adhesive polymer which is admixed with the polyolefin and/or barrier material prior to pipe formation.

6. A pipe according to any one of the preceding Claims wherein the adhesive polymer is derived in part from olefin monomers.

7. A pipe according to any one of the preceding claims wherein the adhesive polymer units are derived from an unsaturated acyl compound selected from unsaturated monocarboxylic acids, unsaturated dicarboxylic acids, and derivatives thereof such as acid halides, amides, imides, anhydrides and esters thereof.

8. A pipe according to Claim 7 wherein the adhesive polymer units are derived from unsaturated dicarboxylic acids and anhydrides thereof.

9. A pipe according to any one of claims 1 to 6 wherein the adhesive polymer units are derived from an unsaturated epoxy compound.

10. A pipe according to Claim 7 wherein the adhesive polymer units are derived from a graft co-polymer derived from maleic anhydride and polyethylene.

11. A pipe according to any one of the preceding Claims wherein the layer or layers containing the adhesive polymer units are of a composition, in at least the interface region, wherein molecular chains containing or defining the adhesive polymer units constitute at least 0.1% by weight of the said layer or layers, for example wherein the said molecular chains constitute 1 to 15% by weight of the layer or layers, preferably approximately 5 to 10% by weight of the said layer or layers.

12. A pipe according to any one of the preceding Claims wherein the barrier layer contains a barrier material selected from ethylene vinyl alcohol, polyamides, modified polyamides, polyethylene terephthalate, polyvinylidene fluoride, and polyvinylidene chloride.

13. A pipe according to Claim 12 wherein the barrier material is a modified material having olefinic characteristics.

14. A pipe according to Claim 13 wherein the olefinic characteristics are imparted by virtue of the barrier material being mixed with, and preferably chemically linked to, an olefinic component.

15. A pipe according to Claim 14 wherein the olefinic component is an elastomer such as ethylene propylene rubber.

16. A pipe according to Claim 14 wherein the barrier material is modified polyamide containing an elastomer such as ethylene propylene rubber, the ethylene propylene rubber being chemically linked to the polyamide.

17. A pipe according to Claim 16 wherein the modified polyamide has been formed by grafting ethylene propylene rubber with the anhydride of an unsaturated carboxylic acid such as maleic anhydride, and then reacting the resulting graft polymer with polyamide so as to effect a chemical linkage therebetween.

18. A process for preparing a pipe, which method comprises coextruding coaxial layers of the polyolefin and barrier material in the configuration claimed in any one of the preceding claims, under conditions effective to fuse together the said polyolefin and barrier layers.

## Patentansprüche

1. Rohr mit einer Rohrwandung, die eine Polyolefinschicht und eine damit ohne eine zwischenliegende Klebstoffschicht verbundene Sperrschicht enthält; jene Sperrschicht ist dünner als die Polyolefinschicht und aus einem Sperrmaterial geformt; jenes Sperrmaterial hat vergleisweise zu dem Polyolefin einen erhöhten Widerstand gegen ein Durchdringen von gasförmigem oder kohlenhydratartigem Material; entweder die Polyolefinschicht oder die Sperrschicht oder beide enthalten mindestens im Bereich des Zusammentreffens der Schichten darin eingelagerte adhäsive Plymerelemente (Polymereinheiten), die aus ungesättigten Expoxy- oder Acrylbestandteilen gebildet sind; die ahäsiven Polymerelemente sind in einer solchen Konzentration vorhanden, daß sie wirksam die Polyolefinschicht mit der Sperrschicht verbinden.

2. Rohr nach Anspruch 1, in dessen Sperrschicht die adhäsiven Polymerelemente inkorporiert sind.

3. Rohr nach Anspruch 1 oder 2, dessen Wandung aus zwei Schichten besteht, nämlich einer Polyolefinschicht und einer Sperrschicht.

4. Rohr nach Anspruch 1 oder 2, dessen Rohrwandung eine Sperrschicht enthält, die zwischen zwei Polyolefinschichten sandwichartig eingelagert ist.

5. Rohr nach einem der vorstehenden Ansprüche, dessen adhäsiven Polymerelemente Teil eines adhäsiven Polymers sind, das dem Polyolefinmaterial und/oder dem Sperrmaterial vor der Rohrausformung zugemischt ist.

6. Rohr nach einem der vorstehenden Ansprüche, dessen adhäsives Polymer teilweise aus Olefinmonomeren abgeleitet ist.

7. Rohr nach einem der vorstehenden Ansprüche, dessen adhäsiven Polymerelemente aus einem ungesättigten Acrylbetandteil abgeleitet sind, der aus ungesättigten Monocarboxylsäuren, ungesättigten Dicarboxylsäuren und Abkömmlingen davon, wie sauren Haliden, Amiden, Imiden, Anhydriden oder Estern, ausgewählt ist.

8. Rohr nach Anspruch 7, dessen adhäsiven Polymerelemente von ungesättigtem Dicarbolsäuren und deren Anhydriden gewonnen sind.

9. Rohr nach einem der Ansprüche 1 bis 6, dessen adhäsiven Polymerelemente aus einem ungesättigten Epoxidbestandteil gewonnen sind.

10. Rohr nach Anspruch 7, dessen adhäsiven Polymerelemente von einem gepfropften (veredelten) Copolymer abgeleitet sind, das von Maleinanhydrid und Polyethylen gewonnen ist.

11. Rohr nach einem der vorstehenden Ansprüche, dessen Schicht oder Schichten, die die adhäsiven Polymerelemente enthält (enthalten), mindestens in dem angrenzenden Schichtbereich, in dem Molekülketten die adhäsiven Plymerelemente enthalten oder bilden, solche mindestens zu 0,1 Gewichts-% in jener Schicht oder Schichten enthalten, wobei z.B. jene Molekülketten 1 bis 15 % des Gewichtes der Schicht oder Schichten ausmachen.

12. Rohr nach einem der vorstehenden Ansprüche, dessen Sperrschicht ein Sperrschichtmaterial enthält, das aus Ethylenvinylalkohol, Polyamiden, modifizierten Polyamiden, Polyethylen-Tetraphthalat, Polyvinylindin-Fluorid und Polyvinylidin-Chlorid ausgewählt ist.

13. Rohr nach Anspruch 12, dessen Sperrschichtmaterial ein modifiziertes Material mit olefinen Eigenschaften ist.

14. Rohr nach Anspruch 13, bei dem die olefinen Eigenschaften des modifizierten Materials durch das Sperrschichtmaterial hervorgebracht sind, das mit einem olefinen Bestandteil vermischt und vorzugsweise damit chemisch verbunden ist.

15. Rohr nach Anspruch 14, dessen olefiner Bestandteil ein Elastomer, wie Ethylen-Propylengummi, ist.

16. Rohr nach Anspruch 14, dessen Sperrschichtmaterial ein modifiziertes Polyamid ist, das ein Elastomer, wie Ethylen-Propylengummi, enthält, wobei das Ethylen-Propylengummi chemisch an das Polyamid gebunden ist.

17. Rohr nach Anspruch 16, dessen modifiziertes Polyamid durch Pfropfen (Veredeln) von Ethylen-Propylengummi mit einem Anhydrid einer ungesättigen Karbolsäure, wie Maleinanhydrid, und anschließendes Reagieren des entstandenen gepfropften Polymers mit Polyamid, so daß eine chemische Bindung dazwischen bewirkt wird, gebildet ist.

18. Verfahren zur Ausrüstung eines Rohres, das gekennzeichnet ist durch eine Koextrusion koaxialer Schichten von Polyolefinmaterial und Sperrschichtmaterial in einer Anordnung wie in einem der vorstehenden Ansprüche beansprucht, unter Bedingungen, die eine Verbindung jener Polyolefinschicht(en) und Sperschicht(en) miteinander bewirken.

## Revendications

1. Tuyau présentant une paroi composée d'une couche de polyoléfine et, liée à cette dernière sans l'intermédiaire d'une couche adhésive, une couche barrière, la couche barrière étant plus mince que la couche de polyoléfine et composée d'un matériau barrière, lequel matériau barrière présente une résistance améliorée à la perméation de matériaux gazeux et/ou hydrocarbures par rapport aux polyoléfines; l'une ou l'autre de la couche de polyoléfine ou de la couche barrière, ou bien les deux, présentant des unités polymères adhésives dérivées de composés époxy ou acyles insaturés incorporées, à la ou auxdites couches, au moins dans la région d'une interface entre les couches; les unités polymères adhésives étant présentes en une concentration adéquate pour permettre la liaison de la couche de polyoléfine à la couche barrière.

2. Tuyau selon la Revendication 1, dans lequel la couche barrière comprend lesdites unités polymères adhésives à l'état incorporé dans celle-ci.

3. Tuyau selon l'une des Revendications 1 ou 2, présentant une paroi composée de deux couches, à savoir une couche de polyoléfine et une couche barrière.

4. Tuyau selon l'une des Revendications 1 ou 2, dans lequel la paroi du tuyau comprend une couche barrière prise en sandwich entre deux couches de polyoléfines.

5. Tuyau selon l'une des Revendications précédentes, dans lequel les unités polymères adhésives font partie d'un polymère adhésif auquel on a ajouté un matériau polyoléfine et/ou un matériau barrière avant formage du tuyau.

6. Tuyau selon l'une des Revendications précédentes, dans lequel le polymère adhésif est dérivé, en partie, d'oléfines monomères.

7. Tuyau selon l'une des Revendications précédentes, dans lequel les unités polymères adhésives sont dérivées d'un composé acyle insaturé choisi parmi les acides monocarboxyliques insaturés, les acides dicarboxyliques insaturés et les dérivés de ces derniers tels que les halogénures d'acide, les amides, les imides, les anhydrides et les esters.

8. Tuyau selon la Revendication 7, dans lequel les unités polymères adhésives sont dérivées d'acides dicarboxyliques insaturés et d'anhydrides de ces derniers.

9. Tuyau selon l'une des Revendications 1 à 6, dans lequel les unités polymères adhésives sont dérivées d'un composé époxy insaturé.

10. Tuyau selon la Revendication 7, dans lequel les unités polymères adhésives sont dérivées d'un copolymère greffé dérivé, quant à lui, de l'anhydride maléique et du polyéthylène.

11. Tuyau selon l'une des Revendications précédentes dans lequel la couche ou les couches contenant les unités polymères adhésives présentent une composition, au moins dans la région de l'interface, dans laquelle des chaînes moléculaires contenant ou définissant les unités polymères adhésives représentent au moins 0,1 % en poids de ladite ou lesdites couches, par exemple dans laquelle ladite chaîne moléculaire représente de 1 à 15 % en poids de ladite ou lesdites couches, et de préférence de 5 à 10 % en poids, environ, de la ou desdites couches.

12. Tuyau selon l'une des Revendications précédentes, dans lequel la couche barrière contient un matériau barrière choisi parmi l'éthylène alcool vinylique, les polyamides, les polyamides modifiés, le polyéthylène téréphtalate, le fluorure de polyvinylidène, et le chlorure de polyvinylidène.

13. Tuyau selon la Revendication 12, dans lequel le matériau barrière est un matériau modifié présentant des caractéristiques oléfiniques.

14. Tuyau selon la Revendication 13, dans lequel les caractéristiques oléfiniques découlent d'un mélange du matériau barrière à un composant oléfinique, de préférence lié chimiquement audit matériau barrière.

15. Tuyau selon la Revendication 14, dans lequel le matériau constitutif oléfinique est un élastomère tel que le caoutchouc éthylène propylène.

16. Tuyau selon la Revendication 14, dans lequel le matériau barrière est un polyamide modifié contenant un élastomère tel que le caoutchouc éthylène propylène, le caoutchouc éthylène propylène étant lié chimiquement au polyamide.

17. Tuyau selon la Revendication 16, dans lequel le polyamide modifié a été constitué par greffage d'un caoutchouc éthylène propylène sur l'anhydride d'un acide carboxylique insaturé tel que l'anhydride maléique, suivi d'une mise en réaction du polymère greffé ainsi obtenu avec le polyamide de telle sorte que s'opère entre eux une liaison chimique.

18. Procédé pour la préparation d'un tuyau, dont la méthode comprend une co-extrusion des couches coaxiales du matériau polyoléfine et du matériau barrière dans la configuration revendiquée dans l'une quelconque des revendications précédentes, dans des conditions adéquates pour permettre la liaison desdites couches de polyoléfines et du matériau barrière.
